# EUROPÄISCHE PATENTSCHRIFT

(11) **EP 3 471 655 B1**
(45) Veröffentlichungstag und Bekanntmachung des Hinweises auf die Patenterteilung: **23.06.2021**
(21) Anmeldenummer: 17768703.5
(22) Anmeldetag: 04.09.2017
(51) Int. Cl.: A61C 8/00, A61C 9/00

(54) **SCANBODY**
SCAN BODY
CORPS DE SCANNAGE

(30) Priorität: 05.09.2016 DE 202016104885 U
(43) Veröffentlichungstag der Anmeldung: 24.04.2019
(73) Patentinhaber: Bloier, Karl, 94065 Waldkirchen Bayern (DE)
(72) Erfinder: Bloier, Karl, 94065 Waldkirchen Bayern (DE)
(74) Vertreter: Lichtnecker, Markus Christoph
(86) Internationale Anmeldenummer: PCT/EP2017/072122
(87) Internationale Veröffentlichungsnummer: WO 2018/042038

(56) Entgegenhaltungen:
- KR-B1- 101 452 849
- US-A1- 2007 141 531
- US-A1- 2007 281 283
- US-A1- 2012 135 371
- US-A1- 2013 171 586
- US-A1- 2014 134 566
- US-A1- 2015 017 600

## Beschreibung

Die Erfindung betrifft die Verwendung eines Systems in einem Scanvorgang. Das System umfasst einen Scanbody als Referenz für einen Scanner im Mundbereich mit einer Befestigungsvorrichtung zum Befestigen an einem Implantat sowie einem, vorzugsweise zumindest im Wesentlichen zylindrischen, sich längs erstreckenden Körper.

Beim Scannen von Mundsituationen, beispielsweise von Implantaten, wird die Startposition, insbesondere auch nach einer Unterbrechung des Scanvorgangs, mittels Triangulation bestimmt. Dazu werden drei Punkte an Oberflächen von oralen Strukturen, z.B. Zähnen, als Referenz ermittelt.

Diese Methode funktioniert jedoch nicht, wenn sämtliche Zähne aus dem Kiefer entfernt sind und/oder wenn der Abstand der Zähne bzw. Implantate größer ist als der optische Scanbereich. Dem Scanner stehen dabei nämlich keine Referenzpunkte mehr zur Verfügung. Das Weichgewebe kann vor allem bei stark atrophiertem Unterkiefer nicht korrekt erfasst werden, da eine zweifelsfreie Triangulation in der beweglichen Schleimhaut, der Wange bzw. der Zunge unmöglich ist.

Auch ein Implantat, also ein Zahnwurzelersatz, wird von einem Scanner nicht erfasst, da sich dieser unter Zahnfleischniveau befindet.

Es sind Scanbodys bekannt, welche auf das Implantat geschraubt werden. Die Scanbodys ragen nach oben über das Implantatniveau in die Mundhöhle und bilden eine gut erkennbare Referenz für den Scanner.

Die Scanbodys werden digital erfasst, wodurch die Positionen der Implantate ermittelt werden können. Nach dem Scanvorgang werden die Scanbodys wieder entfernt. So sind die Scanbodys lediglich zur optischen Erfassung mit dem Implantat verbunden.

Die ermittelten Daten können mittels eines Computerprogramms ausgewertet werden. So kann insbesondere ein 3D-Modell erstellt werden.

Anhand dieser Daten kann schließlich der Zahnersatz angefertigt werden. Der Zahnersatz, insbesondere eine Krone oder Brücke, kann beispielsweise aus einem Block gefräst werden. Auch die Erstellung mittels eines 3D-Druckverfahrens ist möglich.

Nachteilig an bisherigen Scanbodys ist, dass bei nicht rotationsgeschützten Implantataufbauten, z.B. für eine Brücke, einen Kugelkopf-Aufbau oder Locator, ein zylinderförmiger Körper zum Einsatz kommt. Der Körper hat eine bestimmte Aufbauhöhe, über welche die Position des Implantats unterhalb des Schleimhautniveaus ermittelt werden kann. Der Scanbody weist jedoch keine Struktur auf, was den Scanvorgang verkompliziert. Insbesondere können Probleme auftreten, wenn der Scanvorgang unterbrochen wird. Der Scanner findet hierbei keine Orientierungspunkte für den Wiedereinstieg. Die Triangulation kann fehlschlagen, sodass es zu einer fehlerhaften Darstellung kommen kann.

Für rotationsgeschützte Implantataufbauten sind Scanbodys bekannt, welche eine seitliche Ausbuchtung bzw. Einbuchtung aufweisen. Die Ausbuchtung bzw. Einbuchtung erstreckt sich jedoch über den gesamten Körper. Dies kann zu Verletzungen des Zahnfleisches führen. Auch dient die Ausbuchtung bzw. Einbuchtung lediglich als Rotationsschutz und wird nicht als Referenz für den Scanner verwendet. Ein Implantat kann z.B. einen Innenvierkant, Außenvierkant, Vorsprung oder Rücksprung aufweisen, wodurch eine Drehung des Scanbodys durch eine entsprechende, negative Ausformung verhindert wird. Diese Position muss sicher reproduzierbar sein. Da die Verbindungsstelle zwischen Scanbody und Implantat unterhalb des Zahnfleischniveaus liegt, ist diese durch einen optischen Scan nicht abbildbar. Daher weißt der Scanbody eine entsprechende Referenz, z.B. eine Referenzfläche, eine Ausbuchtung bzw. Einbuchtung auf. Beispielsweise kann ein zylindrischer Scanbody eine definierte, ebene Referenzfläche aufweisen, die einer bestimmten Rotationssicherungsfläche zweifelsfrei zugeordnet werden kann.

US 2015/017600 A1 und KR 101 452 849 B1 offenbaren jeweils Scanbodys mit Vorsprüngen, welche sich nicht über die gesamte Länge des Körpers erstrecken.

US 2014/0134566 A1 offenbart ein System mit zwei Scanbodys und einer sich zwischen den Scanbodys erstreckenden Verbindungsschiene, welche zwischen Halterungen der Scanbodys eingeklemmt wird.

Sind die Scanbodys zu weit voneinander entfernt, können diese nicht vom Scanner erfasst werden.

Es ist daher eine Aufgabe der Erfindung, eine Verwendung eines Systems in einem Scanvorgang zu schaffen, wobei das System auf einfache Weise einen zuverlässigen Scanvorgang ermöglicht.

Die Lösung dieser Aufgabe erfolgt durch die Verwendung mit den Merkmalen des unabhängigen Anspruchs.

Erfindungsgemäß ist wenigstens ein sich zumindest im Wesentlichen rechtwinklig zum Körper erstreckender Vorsprung vorgesehen. Der Vorsprung dient hierbei als Referenz für den Scanner. Der Vorsprung ermöglicht eine eindeutige Zuordnung, sodass der Scanvorgang auch nach einer Unterbrechung wieder problemlos fortgesetzt werden kann.

Der Vorsprung erstreckt sich nicht über die gesamte Länge des Körpers. Insbesondere befindet sich unterhalb des Vorsprungs ein Freiraum. Zahnfleisch wird daher nicht vom Scanbody eingeklemmt, wodurch Verletzungen vermieden werden.

Insbesondere ist der Vorsprung, z.B. mindestens 1 mm, unterhalb einer Scanbodyoberkante angeordnet, d.h. oberhalb des Vorsprungs ist ein Freiraum vorgesehen. Auf diese Weise wird verhindert, dass bei einem am Vorsprung angeordneten Verbindungssteg der Verbindungssteg über die Scanbodyoberkante hervorsteht.

Alternativ oder zusätzlich ist der Vorsprung schmäler als der Körper. Insbesondere ist der Durchmesser bzw. Querschnitt des Vorsprungs kleiner als der Durchmesser bzw. Querschnitt des Körpers. Der Vorsprung hebt sich somit vom Körper ab und wird vom Scanner besser erkannt.

Auch wird Material und somit Kosten gespart, wenn sich der Vorsprung nicht über die gesamte Länge des Körpers erstreckt bzw. schmäler als der Körper ist.

Der Körper des Scanbodys kann insbesondere einen Durchmesser zwischen 3 mm und 7 mm aufweisen. Der Scanbody ist somit mit gängigen Implantaten bzw. Laboranalogen kompatibel. Der Begriff Implantat ist hierbei breit zu verstehen und umfasst insbesondere auch so genannte prothetische Aufbauteile.

Die Wanddicke des Scanbodys richtet sich nach dem Außendurchmesser des Implantats, da diese zumindest im unteren Bereich nicht überschritten werden sollte. Die Mindestwandstärkte des Scanbodymaterials muss eingehalten werden. Auch muss bei bestimmten Befestigungsarten z.B. ein Schraubenkopf einer Befestigungsvorrichtung genügend Platz im Inneren finden.

Der Scanbody kann intraoral, z.B. auf Implantaten, und/oder extraoral, z.B. auf Laboranalogen, eingesetzt werden. Vorzugsweise wird er intraoral verwendet, um die Gegebenheiten im Mundbereich unmittelbar zu erfassen.

Weiterbildungen der Erfindung sind auch den abhängigen Ansprüchen, der Beschreibung sowie den beigefügten Zeichnungen zu entnehmen.

Gemäß einer Ausführungsform sind wenigstens zwei sich zumindest im Wesentlichen rechtwinklig zum Körper erstreckende Vorsprünge vorgesehen.

Bereits zwei Vorsprünge ermöglichen eine exakte Erfassung durch den Scanner. Insbesondere kann die Orientierung zuverlässig bestimmt werden. Die Vorsprünge sind vorzugsweise an gegenüberliegenden Seiten des Körpers angeordnet. Es können auch mehr als zwei Vorsprünge, insbesondere drei, vier, fünf, sechs oder sieben Vorsprünge, vorgesehen sein.

Die Vorsprünge sind insbesondere baugleich ausgebildet. Alternativ können diese zumindest teilweise unterschiedlich sein.

Gemäß einer weiteren Ausführungsform sind drei Vorsprünge vorgesehen, welche insbesondere gleichmäßig verteilt um den Körper angeordnet sind. Benachbarte Vorsprünge können vorzugsweise einen 120°-Winkel einschließen.

Wie noch ausgeführt wird, können die Scanbodys über einen Verbindungssteg bzw. mehrere Verbindungsstege miteinander verbunden werden. Wird ein Scanbody mit zwei weiteren Scanbodys verbunden, besetzt z.B. der Verbindungssteg einen bzw. besetzen die Verbindungsstege wenigstens zwei der drei Vorsprünge. Ein weiterer Vorsprung steht jedoch noch zur Erfassung zur Verfügung. Dieser freie Vorsprung reicht aus, um ein 3D-Modell erstellen zu können.

Die drei Vorsprünge sind insbesondere baugleich ausgebildet. Alternativ können z.B. zwei Vorsprünge identisch ausgebildet und ein weiterer als herkömmlicher Vorsprung eines rotationssicheren Scanbodys ausgebildet sein. Aus dem herkömmlichen Vorsprung bzw. einer herkömmlichen Referenzfläche kann durch ein Programm die Position einer Implantatoberkante unterhalb des gescannten Schleimhautniveaus erfasst werden. Es kann somit anhand des herkömmlichen Vorsprungs bzw. der Referenzfläche auf dem Scanbody die Ausrichtung des Rotationsschutzes errechnet werden.

Eine Referenzfläche bzw. ein herkömmlicher Vorsprung ist rein optional. So kann beispielsweise bei Scanbodys ohne Rotationsschutz darauf verzichtet werden. Hier ist lediglich die sichere und/oder reproduzierbare Erfassung der Implantatoberseite und/oder der Neigung erforderlich. Auch eine Referenzfläche eines prothetischen Aufbauteils kann erfasst werden.

Nach einer weiteren Ausführungsform erstreckt sich wenigstens ein Vorsprung nicht über die gesamte Länge des Körpers und/oder ist schmäler als der Körper. So kann auch bei mehreren Vorsprüngen Material eingespart werden. Ferner wird das Zahnfleisch nicht verletzt.

Gemäß einer weiteren Ausführungsform ist wenigstens ein Vorsprung noppenartig ausgebildet. Noppen werden vom Scanner gut erkannt.

In einer vorteilhaften Ausführungsform weist der Vorsprung einen zumindest im Wesentlichen runden Querschnitt auf. Grundsätzlich sind jedoch sämtliche Formen möglich.

Nach einer weiteren Ausführungsform ist der Vorsprung konisch geformt und verjüngt sich zum Körper hin. Ein Verbindungssteg kann auf diese Weise sicher aufgenommen werden.

Gemäß einer weiteren Ausführungsform ist der Körper konisch geformt und verjüngt sich nach oben hin. Im Bereich des Implantats entspricht der Durchmesser vorzugsweise dem Durchmesser des Implantats. Okkusal, also zu den Kauflächen hin, nimmt der Durchmesser ab.

Nach einer weiteren Ausführungsform umfasst die Befestigungsvorrichtung eine Schraube. Durch die Schraube kann der Scanbody lösbar mit dem Implantat verbunden werden. Hierbei wird ein ohnehin vorhandenes Innengewinde des Implantats genutzt.

Gemäß einer weiteren Ausführungsform ist die Schraube unlösbar mit dem Körper verbunden, insbesondere verklebt. Die Befestigung des Scanbodys gestaltet sich dadurch besonders einfach.

Alternativ ist die Schraube lösbar mit dem Körper verbunden, insbesondere wobei der Schraubenkopf an einem Anschlag im unteren Innenbereich des Körpers aufliegt. Die Schraube wird dabei in das Innere des Körpers eingeführt. Im unteren Bereich bleibt der Schraubenkopf am Anschlag hängen. Das Gewinde der Schraube tritt durch eine untere Öffnung des Körpers aus und steht über den Körper vor.

Nach einer weiteren Ausführungsform umfasst der Scanbody ein Zirkonmaterial, Stahl, Titan und/oder einen synthetischen Kunststoff, insbesondere PMMA, bzw. besteht daraus. Der Körper und die Vorsprünge sind insbesondere einstückig geformt. Alternativ können der Körper und die Vorsprünge auch nachträglich miteinander verbunden, z.B. verklebt, werden.

Die Erfindung bedient sich eines Verbindungsstegs zum Verbinden zweier oder mehr Scanbodys, wobei eine erste Aufnahme zur Aufnahme eines Abschnitts eines ersten Scanbodys und eine zweite Aufnahme zur Aufnahme eines Abschnitts eines zweiten Scanbodys vorgesehen sind.

Auch wenn mehr, insbesondere alle, Scanbodys miteinander über denselben Verbindungssteg verbunden werden, müssen sich die Scanbodys, insbesondere die Vorsprünge der Scanbodys, nicht zwingend in derselben Ebene befinden, zumal der Verbindungssteg vorzugsweise elastisch ausgebildet ist. Dies spart beispielsweise Zeit und somit Kosten bei der Befestigung, da die Scanbodys nicht exakt zueinander ausgerichtet werden müssen.

Der Verbindungssteg ermöglicht eine exakte und fehlerfreie Orientierung des Scanners. Auch bei einer Unterbrechung des Scanvorgangs kann die Erfassung ohne Schwierigkeiten fortgesetzt werden.

Die Aufnahmen sind insbesondere dazu ausgebildet, die Abschnitte der Scanbodys festzuklemmen. Der Verbindungssteg hält somit sicher an den Abschnitten und kann dennoch auf einfache Weise wieder gelöst werden.

Der Verbindungssteg kann insbesondere schnell und einfach an den Scanbodys befestigt werden. Eine komplexe Mechanik ist zur Befestigung nicht notwendig. Zeit und somit Kosten können dadurch eingespart werden. Auch wird die Hygiene verbessert, da keine Verunreinigungen an mechanischen Bauteilen haften bleiben.

Gemäß einer Ausführungsform sind die Aufnahmen zur Aufnahme von Vorsprüngen der Scanbodys ausgebildet. Die Vorsprünge entsprechen hierbei den Abschnitten der Scanbodys.

Werden an einem Scanbody mit drei Vorsprüngen zwei Verbindungsstege befestigt, so steht noch ein weiterer, freier Vorsprung für den Scanvorgang bzw. als Referenz für das Computerprogramm zur Verfügung.

Nach einer weiteren Ausführungsform weisen die Aufnahmen einen U-förmigen Querschnitt auf. Die Vorsprünge können somit sicher aufgenommen werden. Auch kann der Verbindungssteg wieder einfach abgenommen werden.

Gemäß einer weiteren Ausführungsform sind die Aufnahmen unterschiedlich orientiert. Dies ist insbesondere bei Scanbodys vorteilhaft, welche vergleichsweise weit voneinander entfernt sind und/oder sich in unterschiedlichen Höhen befinden. Der Halt des Verbindungsstegs wird hierbei verbessert.

Die Aufnahmen können jedoch auch dieselbe Orientierung aufweisen, beispielsweise bei Scanbodys mit geringem Abstand. Insbesondere müssen die Aufnahmen dabei nicht voneinander getrennt sein, d.h. bei den Aufnahmen kann es sich um Aufnahmebereiche handeln.

Vorzugsweise sind die Aufnahmen entgegengesetzt orientiert. Beispielsweise können sich die Schenkel der U-förmigen Abschnitte in entgegengesetzte Richtungen erstrecken. Die erste Aufnahme kann somit z.B. von unten an den Vorsprung des ersten Scanbodys geklipst werden, während die zweite Aufnahme von oben an den Vorsprung des zweiten Scanbodys geklipst wird.

Gemäß einer weiteren Ausführungsform sind die Aufnahmen als Löcher ausgebildet. Der Verbindungssteg kann insbesondere eine Vielzahl an in Längsrichtung nebeneinander angeordneter Löcher aufweisen. Über die Löcher kann der Verbindungssteg an die, beispielsweise kugelförmigen, Vorsprünge des Scanbodys geklipst werden. Die Löcher können dabei insbesondere einen kleineren Durchmesser als die maximalen Durchmesser der Vorsprünge aufweisen. Der Steg wird auf diese Weise sicher gehalten. Eine zusätzliche Sicherung des Stegs, z.B. durch eine Schnur bzw. Zahnseide, ist nicht notwendig.

Der Steg kann somit auf schnelle und unkomplizierte Weise an den Scanbodys befestigt werden. Weist ein Steg eine Vielzahl an Löchern auf, können auch Scanbodys, welche verschiedene Abstände voneinander aufweisen, miteinander verbunden werden. Der Steg ist dadurch vielseitig, insbesondere auch bei unterschiedlichen Abständen, einsetzbar.

Der Verbindungssteg kann insbesondere mindestens 2, 3, 4, 5, 6, 7, 8, 9 oder 10 Löcher aufweisen. Die Anzahl an Löcher ist grundsätzlich beliebig.

Nach einer weiteren Ausführungsform ist der Verbindungssteg zumindest im Wesentlichen gerade ausgebildet. Grundsätzlich ist jedoch auch ein gebogener Verbindungssteg denkbar.

Gemäß einer weiteren Ausführungsform weist der Verbindungssteg eine Skala auf. Die Skala kann Symbole, z.B. Dreiecke, Vierecke, Kreise oder dergleichen, aufweisen. Auch Zahlen oder Buchstaben sind denkbar. Der Scanner hat somit zusätzliche Orientierungshilfen.

Insbesondere ist die Skala erhaben, d.h. diese steht vor. Die Erkennung wird dadurch für den Scanner einfacher.

Nach einer weiteren Ausführungsform umfasst der Verbindungssteg ein Kunststoffmaterial, insbesondere PMMA, PEEK oder HPP, und/oder ein Metallmaterial. Auch kann der Verbindungssteg vollständig daraus bestehen. Der Verbindungssteg ist vorteilhaft leicht elastisch, um an Vorsprüngen der Scanbodys festgeklemmt werden zu können. Die innere Weite bzw. der Durchmesser der Löcher kann dabei gleich oder etwas kleiner als der Durchmesser der Vorsprünge sein.

Durch die Elastizität kann der Verbindungssteg schnell und einfach montiert bzw. demontiert werden. So ist auch ein gewisses Spiel vorhanden und die Scanbodys müssen nicht exakt ausgerichtet werden.

Aus Kostengründen eignet sich ein Kunststoffmaterial besonders gut. Der Verbindungssteg kann beispielsweise im 3D-Druckverfahren erstellt werden. Insbesondere kann der Verbindungssteg einstückig ausgebildet sein.

Die Erfindung betrifft auch ein System mit zumindest zwei erfindungsgemäßen Scanbodys und wenigstens einem erfindungsgemäßen Verbindungssteg. Die Scanbodys können über den Verbindungssteg während des Scanvorgangs miteinander verbunden werden, um dem Scanner Referenzpunkte zur Verfügung zu stellen. Das Scanergebnis wird dadurch deutlich verbessert.

Der Verbindungssteg erstreckt sich vorzugsweise parallel zu den aufgenommenen Vorsprüngen. Insbesondere kann der Verbindungssteg rechtwinklig zum Körper der Scanbodys orientiert sein, wobei aber auch beliebige Winkel möglich sind.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine Perspektivansicht einer ersten Ausführungsform eines erfindungsgemäßen Scanbodys mit einem Implantat,
- Fig. 2: eine Schnittansicht einer Ausführungsform eines erfindungsgemäßen Scanbodys,
- Fig. 3: eine Perspektivansicht einer weiteren Ausführungsform eines erfindungsgemäßen Scanbodys,
- Fig. 4: eine Draufsicht des Scanbodys gemäß Fig. 3,
- Fig. 5: eine Draufsicht einer Ausführungsform eines erfindungsgemäßen Verbindungsstegs,
- Fig. 6: eine Schnittansicht des Verbindungsstegs gemäß Fig. 5,
- Fig. 7: eine Draufsicht einer Ausführungsform eines erfindungsgemäßen Systems aus Scanbodys und Verbindungssteg,
- Fig. 8: eine Perspektivansicht einer weiteren Ausführungsform eines erfindungsgemäßen Scanbodys, und
- Fig. 9: eine Draufsicht einer weiteren Ausführungsform eines erfindungsgemäßen Verbindungsstegs.

Zunächst ist zu bemerken, dass die dargestellten Ausführungsformen rein beispielhafter Natur sind. Insbesondere können mehr oder weniger Vorsprünge vorgesehen sein. Auch kann die Form der Vorsprünge variieren. Die Merkmale einer Ausführungsform können auch beliebig mit Merkmalen einer anderen Ausführungsform kombiniert werden.

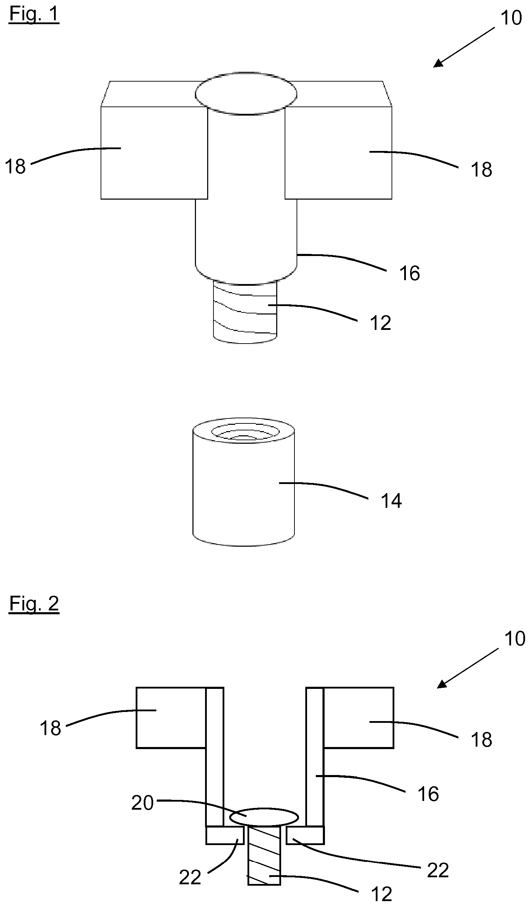

In Fig. 1 ist ein Scanbody 10 dargestellt, der über eine als Schraube 12 ausgebildete Befestigungsvorrichtung an einem Implantat 14 befestigt werden kann. Von dem Implantat 14 ist lediglich der obere Abschnitt dargestellt. Anstelle eines Implantats 14 kann entsprechend auch ein Laboranalog vorgesehen sein.

Der Scanbody 10 umfasst neben der Schraube 12 einen zylinderförmigen Körper 16. Der Körper 16 kann optional eine Referenzfläche aufweisen. Dies ist vor allem bei rotationssicheren Scanbodys der Fall. In einem oberen Bereich des Körpers 16 sind zwei Vorsprünge 18 vorgesehen. Die Vorsprünge 18 erstrecken sich rechtwinklig zum Körper 16, wobei sie sich jedoch nicht über die gesamte Länge des Körpers 16 erstrecken. So verbleibt unterhalb ein Freiraum.

Die Vorsprünge 18 sind ferner schmäler als der Körper 18.

Anhand der Vorsprünge 18 kann ein nicht dargestellter Scanner die Position und Tiefe des Scanbodys 10 präzise erfassen. Der Scanbody 10 bildet eine Referenz, welche zur Erstellung eines 3D-Modells verwendet werden kann.

Der untere Bereich des Körpers 16 kann an die Form des Implantats 14 angepasst sein. Die untere Stirnseite des Scanbodys 10 kann dabei als Negativ zur Oberseite des Implantats 14 ausgebildet sein. So kann der Körper 16 beispielsweise einen nach außen oder innen gerichteten Kegel aufweisen. Ein nach außen gerichteter Kegel kann in eine trichterförmige Aussparung des Implantats 14 gesteckt werden. Ein nach innen gerichteter Kegel kann hingegen eine entsprechende trichterförmige Ergebung des Implantats 14 aufnehmen.

Die Schraube 12 kann am unteren Bereich des Körpers 16 festgeklebt sein. Alternativ kann diese, wie in Fig. 2 gezeigt, auch lösbar im Inneren des Körpers 16 angeordnet sein.

Ein Schraubenkopf 20 liegt dabei auf einem als Auskragung 22 des Körpers 16 ausgebildeten Anschlag auf. Die Auskragung 22 verengt die Öffnung des Körpers 16 und verhindert, dass die Schraube 12 nach unten durchrutscht. Lediglich das Gewinde erstreckt sich nach unten und ragt über den Körper 16 hinaus.

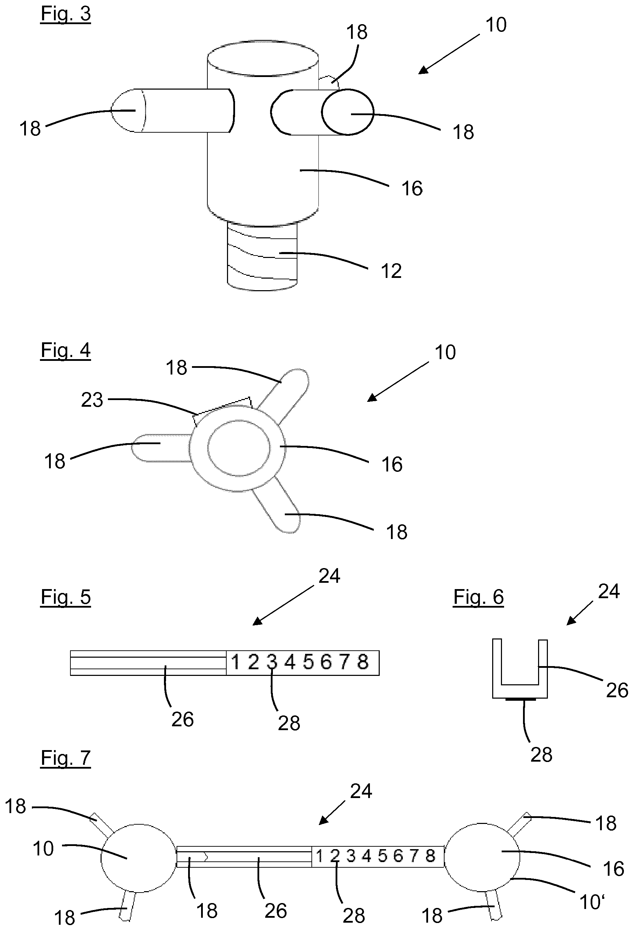

Der Scanbody, welcher in Fig. 3 dargestellt ist, weist drei runde Vorsprünge 18 auf. Die Vorsprünge 18 können auch kugelförmig bzw. teilkugelförmig ausgebildet sein.

Die Vorsprünge 18 sind, wie auch in der Draufsicht in Fig. 4 zu sehen ist, gleichmäßig um den Körper 16 verteilt angeordnet. Benachbarte Vorsprünge 18 schließen jeweils einen 120°-Winkel miteinander ein. Optional kann auch eine Referenzfläche 23 vorgesehen sein, über welche Informationen über einen Rotationsschutz des Implantats 14 angezeigt werden können.

Der Körper 16 kann innen hohl sein. Alternativ ist auch ein massiver Körper 16 möglich.

Fig. 5 zeigt einen Verbindungssteg 24 mit zwei entgegengesetzt orientierten Aufnahmen 26. Der Verbindungssteg 24 ist individuell kürzbar. Auch kann der Verbindungssteg lediglich den rechten oder linken Abschnitt umfassen und keine entgegengesetzten Orientierungen aufweisen.

Wie in der Schnittansicht gemäß Fig. 6 zu sehen ist, weist jede Aufnahme 26 einen U-förmigen Querschnitt auf.

An der Rückseite jeder Aufnahme 26 ist eine Skala 28 vorgesehen, welche Zahlen umfasst. Die Skala 28 ist optional. Diese bietet jedoch weitere Referenzpunkte für den Scanner.

In Fig. 7 ist ein System mit zwei Scanbodys 10, 10' und einem Verbindungssteg 24 dargestellt. Eine erste U-förmige Aufnahme 26 wird von unten am Vorsprung 18 des ersten Scanbodys 10 festgeklemmt. Die zweite Aufnahme, welche bis auf die Orientierung analog zur ersten Aufnahme 26 aufgebaut ist, wird von oben auf einen Vorsprung des zweiten Scanbodys 10' geklemmt. Auch ein seitliches Klemmen ist grundsätzlich möglich.

Die Scanbodys 10, 10' sind somit über den Verbindungssteg 24 miteinander verbunden. Die freien Vorsprünge 18 sowie der Verbindungssteg 24 mit der Skala 28 dienen dem Scanner als Referenz.

Anhand der Daten kann mit Hilfe eines Computerprogramms ein 3D-Modell erstellt werden. Anschließend kann ein Zahnersatz ausgeformt werden.

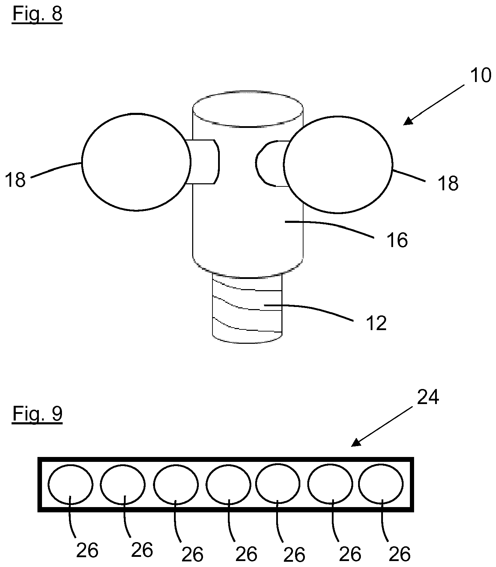

In Fig. 8 ist ein Scanbody 10 mit kugelförmigen Vorsprüngen 18 gezeigt. Die Kugeln könnten auch unmittelbar am Körper 16 anliegen oder weiter davon entfernt sein.

Der in Fig. 9 gezeigte Verbindungssteg 24 weist mehrere als Löcher 26 ausgebildete Aufnahmen auf. Über die Löcher 26 kann der Verbindungssteg 24 über, z.B. kugelförmige, Vorsprünge 18 der Scanbodys 10, 10' geklipst werden.

Der Verbindungssteg 24 ist vorzugsweise elastisch ausgebildet. Dieser kann auch mehrere Scanbodys 10, 10', insbesondere sämtliche Scanbodys 10, 10', miteinander verbinden.

### Bezuqszeichenliste

- 10, 10': Scanbody
- 12: Schraube, Befestigungsvorrichtung
- 14: Implantat
- 16: Körper
- 18: Vorsprung
- 20: Schraubenkopf
- 22: Auskragung, Anschlag
- 23: Referenzfläche
- 24: Verbindungssteg
- 26: Aufnahme, Loch
- 28: Skala

## Patentansprüche

1. Verwendung eines Systems in einem Scanvorgang, wobei das System zumindest zwei Scanbodys (10, 10') und wenigstens einen Verbindungssteg (24) aufweist, wobei jeder Scanbody (10, 10') als Referenz für einen Scanner im Mundbereich ausgebildet ist und
eine Befestigungsvorrichtung (12) zum Befestigen an einem Implantat (14),
einen, vorzugsweise zumindest im Wesentlichen zylindrischen, sich längs erstreckenden Körper (16), und
wenigstens einen sich zumindest im Wesentlichen rechtwinklig zum Körper (16) erstreckenden Vorsprung (18) umfasst, wobei sich der Vorsprung (18) nicht über die gesamte Länge des Körpers (16) erstreckt, insbesondere unterhalb einer Scanbodyoberkante angeordnet ist, und/oder schmäler als der Körper (16) ist,
und wobei der Verbindungssteg (24) zum Verbinden der zwei Scanbodys (10, 10') ausgebildet ist, wobei an dem Verbindungssteg (24) eine erste Aufnahme (26) zur Aufnahme eines Abschnitts eines ersten Scanbodys (10) und eine zweite Aufnahme zur Aufnahme eines Abschnitts eines zweiten Scanbodys (10') vorgesehen sind.

2. Verwendung nach Anspruch 1,
**dadurch gekennzeichnet,**
**dass** wenigstens zwei Vorsprünge (18) vorgesehen sind, vorzugsweise drei Vorsprünge (18), welche insbesondere gleichmäßig verteilt um den Körper (16) angeordnet sind.

3. Verwendung nach Anspruch 2,
**dadurch gekennzeichnet,**
**dass** die Vorsprünge (18) baugleich ausgebildet sind.

4. Verwendung nach einem der vorhergehenden Ansprüche,
**dadurch gekennzeichnet,**
**dass** wenigstens ein Vorsprung (18) noppenartig ausgebildet ist und einen zumindest im Wesentlichen runden Querschnitt aufweist.

5. Verwendung nach einem der vorhergehenden Ansprüche,
**dadurch gekennzeichnet,**
**dass** wenigstens ein Vorsprung (18) noppenartig ausgebildet ist, wobei der Vorsprung (18) kugelförmig oder teilkugelförmig ausgebildet ist.

6. Verwendung nach einem der vorhergehenden Ansprüche,
**dadurch gekennzeichnet,**
**dass** der Vorsprung (18) konisch geformt ist und sich zum Körper (16) hin verjüngt und/oder dass der Körper (16) konisch geformt ist und sich nach oben hin verjüngt.

7. Verwendung nach einem der vorhergehenden Ansprüche,
**dadurch gekennzeichnet,**
**dass** der Scanbody (10, 10') ein Zirkonmaterial, Stahl, Titan und/oder einen synthetischen Kunststoff, insbesondere PMMA, umfasst bzw. daraus besteht und/oder
**dass** der Verbindungssteg (24) ein Kunststoffmaterial, insbesondere PMMA, PEEK oder HPP, und/oder ein Metallmaterial umfasst bzw. daraus besteht.

8. Verwendung nach einem der vorhergehenden Ansprüche,
**dadurch gekennzeichnet,**
**dass** die Aufnahmen (26) zur Aufnahme von Vorsprüngen (18) der Scanbodys (10, 10') ausgebildet sind.

9. Verwendung nach einem der vorhergehenden Ansprüche,
**dadurch gekennzeichnet,**
**dass** die Aufnahmen (26) einen U-förmigen Querschnitt aufweisen.

10. Verwendung nach einem der vorhergehenden Ansprüche,
**dadurch gekennzeichnet,**
**dass** die Aufnahmen (26) unterschiedlich orientiert sind.

11. Verwendung nach Anspruch 10,
**dadurch gekennzeichnet,**
**dass** die Aufnahmen (26) entgegengesetzt orientiert sind.

12. Verwendung nach einem der vorhergehenden Ansprüche,
**dadurch gekennzeichnet,**
**dass** die Aufnahmen als Löcher (26) ausgebildet sind.

13. Verwendung nach einem der vorhergehenden Ansprüche,
**dadurch gekennzeichnet,**
**dass** der Verbindungssteg (24) zumindest im Wesentlichen gerade ausgebildet ist.

14. Verwendung nach einem der vorhergehenden Ansprüche,
**dadurch gekennzeichnet,**
**dass** der Verbindungssteg (24) eine, insbesondere erhabene, Skala (28) aufweist.

15. Verwendung nach einem der vorhergehenden Ansprüche,
**dadurch gekennzeichnet,**
**dass** der Verbindungssteg (24) elastisch ausgebildet ist.

## Claims

1. Use of a system in a scanning operation, wherein the system comprises at least two scan bodies (10, 10') and at least one connecting portion (24), wherein each scan body (10, 10') is configured as a reference for a scanner in the mouth region, and comprises
a fastening device (12) for fastening to an implant (14),
a body (16) extending longitudinally, the body being preferably at least essentially cylindrical, and
at least one projection (18) extending at least essentially at right angles to the body (16),
wherein the projection (18) does not extend over the entire length of the body (16), especially is disposed below a scan body upper edge, and/or is narrower than the body (16)
and wherein the connecting portion (24) is configured for connecting the two scan bodies (10, 10'), wherein a first receptacle (26) for receiving a portion of a first scan body (10) and a second receptacle for receiving a portion of a second scan body (10') are provided on the connecting portion (24).

2. Use according to claim 1,
**characterised in that**
at least two projections (18) are provided, preferably three projections (18), which in particular are disposed uniformly around the body (16).

3. Use according to claim 2,
**characterised in that**
the projections (18) are of identical design.

4. Use according to any of the preceding claims,
**characterised in that**
at least one projection (18) is nub-like in design and has an at least essentially circular cross-section.

5. Use according to any of the preceding claims,
**characterised in that**
at least one projection (18) is configured to be nub-like, wherein the projection (18) is configured to be spherical or partially spherical.

6. Use according to any of the preceding claims,
**characterised in that**
the projection (18) is conically shaped and tapers towards the body (16) and/or that the body (16) is conically shaped and tapers upwards.

7. Use according to any one of the preceding claims,
**characterised in that**
the scan body (10, 10') comprises or consists of a zirconium material, steel, titanium and/or a synthetic polymer, especially PMMA, and/or
**in that** the connecting portion (24) comprises or consists of a polymer material, especially PMMA, PEEK or HPP, and/or a metal material.

8. Use according to any of the preceding claims,
**characterised in that**
the receptacles (26) are configured for receiving projections (18) of the scan bodies (10, 10').

9. Use according to any of the preceding claims,
**characterised in that**
the receptacles (26) have a U-shaped cross-section.

10. Use according to any of the preceding claims,
**characterised in that**
the receptacles (26) are oriented differently.

11. Use according to claim 10,
**characterised in that**
the receptacles (26) are oriented in opposite directions.

12. Use according to any of the preceding claims,
**characterised in that**
the receptacles are configured as holes (26).

13. Use according to any one of the preceding claims,
**characterised in that**
the connecting portion (24) is configured to be at least essentially straight.

14. Use according to any of the preceding claims,
**characterised in that**
the connecting portion (24) has a scale (28), especially a raised scale.

15. Use according to any of the preceding claims,
**characterised in that**
the connecting portion (24) is configured to be elastic.

## Revendications

1. Utilisation d'un système lors d'une opération de balayage, le système comprenant au moins deux corps de balayage (10, 10') et au moins une barrette de liaison (24),
dans laquelle
chaque corps de balayage (10, 10') est réalisé à titre de référence pour un scanner dans la zone buccale, et comprend
un dispositif de fixation (12) destiné à être fixé à un implant (14),
un corps (16) de préférence au moins sensiblement cylindrique s'étendant longitudinalement, et
au moins une saillie (18) s'étendant au moins sensiblement à angle droit par rapport au corps (16), la saillie (18) ne s'étendant pas sur toute la longueur du corps (16) et étant disposée en particulier au-dessous d'un bord supérieur du corps de balayage, et/ou étant plus étroite que le corps (16),
et la barrette de liaison (24) est réalisée pour relier les deux corps de balayage (10, 10'), la barrette de liaison (24) présentant un premier logement (26) pour recevoir une partie d'un premier corps de balayage (10) et un second logement pour recevoir une partie d'un second corps de balayage (10').

2. Utilisation selon la revendication 1,
**caractérisée en ce que**
il est prévu au moins deux saillies (18), de préférence trois saillies (18), qui sont disposées en particulier en répartition régulière autour du corps (16).

3. Utilisation selon la revendication 2,
**caractérisée en ce que**
**en ce que** les saillies (18) sont de construction identique.

4. Utilisation selon l'une des revendications précédentes,
**caractérisée en ce que**
au moins une saillie (18) est réalisée en forme de bouton et présente une section transversale au moins sensiblement ronde.

5. Utilisation selon l'une des revendications précédentes,
**caractérisée en ce que**
au moins une saillie (18) est réalisée en forme de bouton, la saillie (18) étant de forme sphérique ou partiellement sphérique.

6. Utilisation selon l'une des revendications précédentes,
**caractérisée en ce que**
la saillie (18) est de forme conique et s'effile vers le corps (16), et/ou **en ce que** le corps (16) est de forme conique et s'effile vers le haut.

7. Utilisation selon l'une des revendications précédentes,
**caractérisée en ce que**
le corps de balayage (10, 10') comprend ou consiste en un matériau de zirconium, acier, titane et/ou en une matière plastique synthétique, en particulier en PMMA, et/ou
**en ce que** la barrette de liaison (24) comprend ou consiste en une matière plastique, en particulier en PMMA, PEEK ou HPP, et/ou comprend ou consiste en un matériau métallique.

8. Utilisation selon l'une des revendications précédentes,
**caractérisée en ce que**
les logements (26) sont réalisés pour recevoir des saillies (18) des corps de balayage (10, 10').

9. Utilisation selon l'une des revendications précédentes,
**caractérisée en ce que**
les logements (26) présentent une section transversale en forme de U.

10. Utilisation selon l'une des revendications précédentes,
**caractérisée en ce que**
les logements (26) sont orientés différemment.

11. Utilisation selon la revendication 10,
**caractérisée en ce que**
les logements (26) sont orientés dans des directions opposées.

12. Utilisation selon l'une des revendications précédentes,
**caractérisée en ce que**
les logements sont réalisés sous forme de trous (26).

13. Utilisation selon l'une des revendications précédentes,
**caractérisée en ce que**
la barrette de liaison (24) est réalisée au moins sensiblement droite.

14. Utilisation selon l'une des revendications précédentes,
**caractérisée en ce que**
la barrette de liaison (24) présente une échelle (28), en particulier une échelle en relief.

15. Utilisation selon l'une des revendications précédentes,
**caractérisée en ce que**
la barrette de liaison (24) est de réalisée élastique.
